# EUROPEAN PATENT SPECIFICATION

(11) **EP 3 290 759 B1**
(45) Date of publication and mention of the grant of the patent: **18.03.2020**
(21) Application number: 17189597.2
(22) Date of filing: 06.09.2017
(51) Int. Cl.: F16K 15/03, E03F 7/04, E03F 7/06, E05D 5/02, E05D 5/08

(54) **FLAP GATE**
KLAPPE
VANNE À CLAPET

(30) Priority: 06.09.2016 DK 201670683
(43) Date of publication of application: 07.03.2018
(73) Proprietor: Dannozzle Holding New ApS, 9530 Støvring (DK)
(72) Inventor: ERIKSEN, Jan, 9000 Aalborg (DK)
(74) Representative: Tellefsen, Jens J.

(56) References cited:
- WO-A1-2015/124158
- JP-A- 2011 241 776
- JP-U- S6 184 788
- JP-U- S53 138 733
- US-A- 199 696
- US-A- 2 831 499
- US-A- 2 856 956
- US-A1- 2003 089 404
- US-A1- 2016 158 673
- US-B2- 7 240 378

## Description

### Field of the Invention

The present invention relates to a flap gate and in particular the type of flap gate used for closing and opening for a water flow through outlet pipes.

### Background of the Invention

Flap gates are usually designed to close off outflow pipes, for example into harbours or other open bodies of water. The purpose of a flap gate is to allow one way flow, i.e. flow from the pipe into the open body of water whereas flow the other way shall be limited or avoided altogether. Should water from the open body of water flow into the outflow pipe, for example by extreme high water, storms etc., it might lead to flooding further inland and substantial damage relating to such a submersion. Consequently, flap gates are installed in order to avoid this detrimental effect.

Basically, a flap gate functions by having a differential pressure between the rear and the front side of the flap gate such that the flap gate automatically opens and closes, depending on which pressure is the highest.

Traditionally flap gates are made from steel, but steel is relatively heavy and not very flexible. When exposed to substantial forces which may occur during extreme weather conditions the steel constructions are prone to crack, tear or bend and as such become twisted out of their original design thereby losing their ability to effectively close off the outflow pipe. Secondly, steel flap gates are usually relatively heavy, requiring relatively high water pressure on the back side before they open, such that a substantial amount of water may be aggregated in the outflow pipe before the flap gate opens thereby draining water out from the surroundings.

Some of these issues were addressed in the applicant's prior application WO2015/124158 in which it is suggested to make the flap gate from a composite material, particularly recycled GRC. Extensive testing showed that the recycled GRC material was sufficiently flexible yet strong enough to withstand the extreme forces to which flap gates may be exposed.

Although this flap gates works perfectly, there are situations, particularly when the water flow from the outflow pipe is relatively minimal, where the flap gate has a tendency not to open sufficiently and also in situations with relatively calm weather the natural sediments in the sea bottom may aggregate in front of the flap gate and build up a layer such that it requires a substantial water level on the rear side of the flap gate, i.e. upstream from the opening of the outflow pipe in order to force the flap gate through the accumulated sediment.

GB 2 046 405 discloses a check valve comprising a frame suitable to be mounted on an outlet pipe. The frame is provided with a beam spanning a diameter and substantially dividing the outlet in two equal sections. Two valve plates are provided, each covering approx. half the outlet. The valve plates are pivotably hinged to a hinge construction on the beam. The valve plates pivot about a common axle passed through projecting ears on the valve plates and ears provided upstanding from the beam. In order to maintain the the check valve in a closed position when not forced open, a spring is provided for biasing the valve plates against the frame (and beam). Avery similar construction is disclosed in DE 27 28 115 and DE 37 20 821 (in this disclosure the springs are in the shape of the valve plates being made from a resilient material such that the spring/biasing force is built into the construction due to the selected material).
The three different constructions mentioned above all have valve plates sharing the same hinge construction. Although this provides for less parts, it also provides a number of drawbacks. For example it is not possible to vary the biasing force between the valve plates, the valve plates must have/cover substantially equal areas of the outlet in order to maintain a balance in use, once the lower valve plate is opened, the spring will be tightened thereby providing a larger closing force on the upper valve plate - thereby making it harder to open. Where the valve plates are arranged to pivot around a vertical axle (as suggested in GB 2 046 405) the entire outlet will be exposed once the valve plates open - even partially. If back-wash from the volume the outlet flows into occurs, the back-wash will be able to enter and travel inside the outlet pipe, thereby forfeiting the purpose of the flap-gate principle.

Further, in JP S53 138733U2 and JP2011241776 are disclosed two known flap gate systems corresponding to the preamble of independent claim 1.

### Object of the Invention

Consequently there is a need to improve the otherwise well-functioning flap gate according to WO2015/124158 in order to address some of the issues mentioned above.

### Description of the Invention

The invention addresses this by providing a flap gate for at least opening and closing a part of an opening of an outflow pipe, wherein the flap gate has two or more valve plates, each valve plate having a hinge assembly pivotably mounted on a frame member, said frame member being adapted to be mounted across the opening of an outflow pipe.

By providing two valve plates it is foreseen that less pressure and counter-pressure is present when the smaller valve plate has to move such that the required outflow volume is substantially less in that it only has to move a smaller valve plate as compared to valve plate constructions having a single valve plate closing the entire opening.

The invention also provides a flap gate where the flap gate has a first and second valve plate and where the frame member has a central beam, substantially dividing the opening, where the first valve plate in the valve plate's closed position is in contact with part of the frame member and the central beam, and where the second valve part's hinge assembly is attached to the central beam, and in the second valve plate's closed position the second valve plate is in contact with part of the frame member and the central beam.

In this manner two completely separate valve plates are provided where the central beam in addition to providing fastening for the second valve plate also provides stiffness to the construction and at the same time provides a land for the first or upper valve plate.

In other embodiments of the invention the flap gate is provided with a bulbous member arranged on one or more valve plates, where said bulbous member in use is arranged on the side of the valve plates facing away from the opening of the outflow pipe (downstream side).

It is known from shipping an particularly for large cargo vessels to provide them with a bulb which is submerged and acts as breaking the water resistance for the ship as it travels through the water.

In the same manner the flap gates as disclosed in another embodiment of the invention is provided with a bulbous member arranged adjacent a lower periphery of each valve plate. The bulbous member as is the case for ships also serves to dissipate the energy in the water such that it becomes easier for the valve plate to move against the body of water on the other side of the valve plate.

In a further advantageous embodiment of the invention each valve plate along its periphery on the side of the valve plate facing the frame member and/or the central beam member is provided with a flexible gasket.

In this manner it is achieved that a substantially watertight closure is provided for the valve plate such that water does not seep in or out through the flap gate during normal operation. Experience has shown that a gasket made of a large number of glass filaments arranged inside a flexible or permeable sleeve is especially suitable for this task in that due to the relatively harsh environment and large impact forces to which a flap gate is exposed when used in a marine environment this type of gasket has the long lasting qualities needed in order to provide a substantial service life.

In a still further advantageous embodiment of the invention the flap gate on the side of the valve plates which in use faces the outflow pipe, a flow diverter is arranged on a lower part of at least one valve plate, said flow diverter providing a curved surface urging the water outflow downwards. The diverters provide extra water force on the flap gates urging them to open once the water through the outflow pipe starts flowing. Particularly the lower flow diverter provided on the lower valve plate urging the water downwards will flush away any sediments blocking the proper opening of the lower valve plate which has accumulated in front of the valve plate.

As an alternative to this, the flap gate in a further advantageous embodiment provides that the lower valve plate is provided with a water passage way created between a lower end of the valve plate and the opening of the pipe. Typically the passage way will be cut-away section of the valve plate allowing a constant water flow past the valve plate. In periods where the outflow from the outflow pipe is positive, i.e. there is an outflow of water from the outflow pipe into the free body of water, the water will flush away any sediments in front of the valve plate thereby helping in keeping the area in front of the valve plate open such that as the amount of water outflow from the outflow pipe increases, the valve plate will be able to operate properly.

In a further advantageous embodiment one or more nozzles are arranged on the flap gates' side opposite to the side facing the outflow opening, where the nozzles are connected to a source of pressurized water, for directing a jet of water against sediment in the vicinity of a lower extremity of the flap gates.

In this manner it is possible to actively flush any sediment away from the flap gates, such that their proper functioning can be assured. Typically the nozzles will be connected to a high pressure water installation. The flushing by activating the jets issuing from the nozzles may routinely be activated at fixed time intervals or on a need basis.

### Description of the Drawing

The invention will now be explained with reference to the accompanying drawing wherein
- figure 1: illustrates a cross-section through a flap gate
- figure 2: illustrates a similar arrangement as in figure 1 seen in a front view
- figure 3: illustrates various combinations of valve plates
- figure 4: illustrates a detail of a special embodiment of the lower valve plate
- figure 5: illustrates an example of a rectangular valve plate

### Detailed Description of the Invention

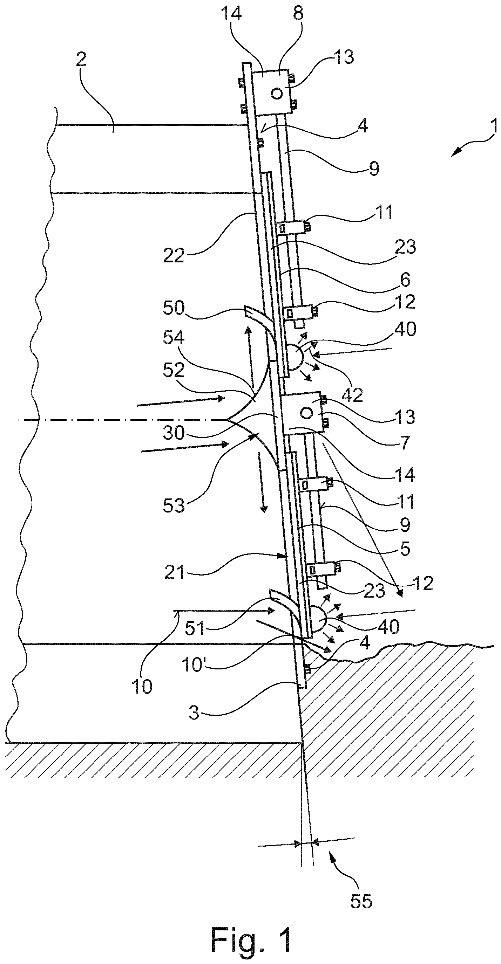

In figure 1 is illustrated a cross-section through a flap gate according to the invention. The flap gate 1 is arranged at the outlet of an outflow pipe 2 where the water flow is indicated by the arrows 10.

The flap gate 1 comprises a frame member 3 which frame member 3 by means of bolts 4 is fastened to the outlet opening of the outflow pipe 2. In this particular embodiment the flap gate comprises two valve plates 5,6 which are provided with separate hinge assemblies 7,8. The hinge assembly includes at least one rod 9 which by means of brackets 11,12 connects the rod 9 to the valve plate 6,5. The rods 9 are connected by an axle 13 in a hinge mounting block 14 which hinge mounting block 14 is attached to the frame member 3. In this manner a very flexible hinge assembly is provided and at the same time a very sturdy construction allowing the valve plates 5,6 to independently pivot and open as necessary.

The valve plate 5,6 will typically be made from a relatively rigid, but also a flexible material and in this context particularly recycled GRC from wind turbine blades has proved very useful and very resistant to the environmental and physical impacts to which flap gates of this type are exposed.

In order to create a substantially fluid tight connection between the valve plates 5,6 and the frame member 3 the valve plates 5,6 are dimensioned to be larger than the openings 21,22 to which they are supposed to close. The valve plates may furthermore be provided with a sealing member 23. An especially preferred sealing member comprises a tubular webbing which webbing is filled with glass threads such that as the valve plates 5,6 engage the frame member 3 the webbing and the glass threads will be deformed creating a substantially watertight closure.

In the embodiment illustrated in figure 1 having two valve plates a frame member 30 is arranged across the opening of the outflow pipe 2 in order to create a base for the hinge assembly 7 of the lower valve plate and at the same time create a land for the upper valve plate 6 in order to provide a closing surface for this valve plate.

The frame 3 and frame member 30 will typically be made as one single unit, but it is also within the scope of the present invention contemplated that the frame member 30 may be a separate part which may be fastened either to the frame 3 or to the surrounding structure independently from the frame 3.

The flap gate according to the present invention will typically be used in connection with an outflow pipe 2 having an opening facing for example a harbour or other free body of water. The flap gate serves to allow flow as indicated by the arrows 10 from the outflow pipe and into the open body of water and hinder that flow from the open body of water enters the outflow pipe thereby potentially flooding and submerging the surroundings from which the outflow pipe should drain water into the open body of water.

In order to minimize the impact of the open body of water on the valve plates, for example in the shape of wave action, a bulbous member 40 is arranged adjacent at least a lower part of the edge of each valve plate 5,6. The bulbous member 40 will as it is recognized, for example from ships, distribute the water pressure, thereby minimizing the impact of the water pressure on that part of the valve plate. This is illustrated by the small arrows 42 indicating that there is a distribution and also a dissipation of water power created by the bulbous member 40 such that the overall impact on the valve plate 5,6 is significantly reduced.

On the upstream side of the valve plates 5,6, i.e. the side of the valve plates facing the opening of the outflow pipe the valve plates 5,6 are in this embodiment provided with flow diverters 50,51. The central beam 30 is also provided with a flow diverter 52.

The flow diverter 50 arranged on the upper valve plate 6 serves to concentrate the water pressure from the water flowing out of the pipe to the lower portion of the valve plate such that an increased force will be applied to the valve plate thereby creating enough pressure to allow the valve plate 6 to pivot in a hinge arrangement 8 thereby letting liquid/water out of the outflow pipe. The basic physical principle of force multiplied with length, facilitates that when the force of the water attacks the plate as far away from the pivot point as possible the water's ability to urge the valve plate open is increased.

The flow diverter 51 arranged on the lower valve plate also serves the same purpose as the flow diverter 50 arranged on the upper valve plate 6, but additionally the flow diverter will direct the water leaving the outflow pipe in a downward direction as indicated by the arrow 10'. Due to the water flow 10' any sediment, such as for example sand or sludge assembled in front of the valve plate 5 will be flushed away thereby ensuring and aiding the valve plate 5 in working properly, i.e. opening when the outflow of water from the outflow pipe has such a magnitude that it will force the valve plate 5 against the water pressure from the outside stemming from the open body of water.

The flow diverter 52 arranged on the central beam in this embodiment has two curved surfaces 53,54 in order to direct the water upwards and downwards respectively. The upwards directed water will encounter the flow diverter 50 arranged on the upper valve plate 6 whereas the water directed downwards by the curved surface 53 will add to the water pressure on the inside of the valve plate 5 thereby aiding in opening the valve plate 5.

In this embodiment the flap gate 1 is arranged on the opening of the outflow pipe such that an angle of 5 degrees (55) ensures that the flap gate under normal, stable conditions will be closed whereby water from the open body of water, i.e. the harbour or sea, will not be able to enter the outflow pipe's opening.

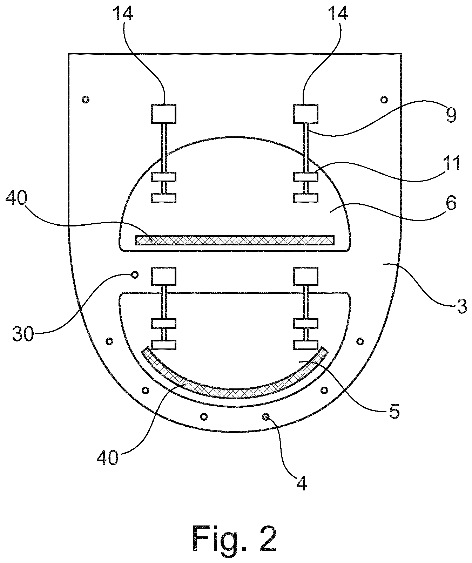

Turning to figure 2 a similar arrangement as described above with reference to figure 1 is seen in a front view and same features are denoted with the same reference numbers.

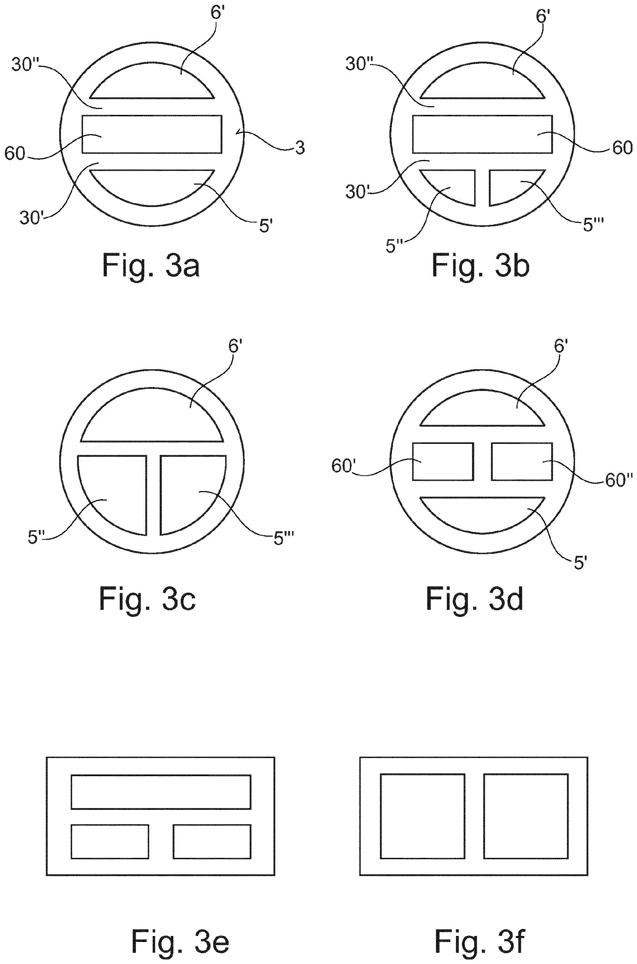

In figures 3a-3d are illustrated various combinations of valve plates covering the opening of an outflow pipe. For the sake of clarity only the division of valve plates for each flap gate is illustrated, but it is clear that each flap gate construction will comprise at least a majority of the features as discussed above with reference to figure 1, for example hinge arrangements, water seals etc.

In figure 3a is illustrated a frame member 3 having three valve plates 5',6',60 such that two beams 30',30" are arranged across the opening.

In figure 3b a similar flap gate is illustrated having four valve plates 6',60,5",5"'. This embodiment also has two beam members 30',30", but otherwise features as described above in order to open and close and control the valve plates are also included in the contents.

In figure 3c a further variation is illustrated where three flap gates 5",5"',6' are provided in a flap gate according to the present invention. Further, in figure 3d a further variation having upper and lower valve gates 5',6' and two intermediate flap gates 60',60".

In fig. 3e and 3f is illustrated embodiments where the frame is rectangular (may also be quadratic) fitting for example on square or rectangular outflow pipes. Depending on size the flap gates may be provided with any sub-division of valve plates.

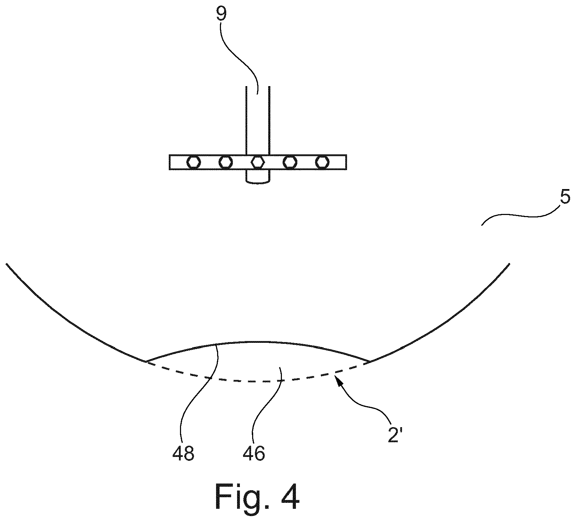

In figure 4 is illustrated a lower valve plate 5 having a passage way 46 provided by cutting away a section of the valve plate 5 which therefore will have a lower rim 48 as indicated in the figure. The dashed line 2' indicates the contour of the outflow pipe.

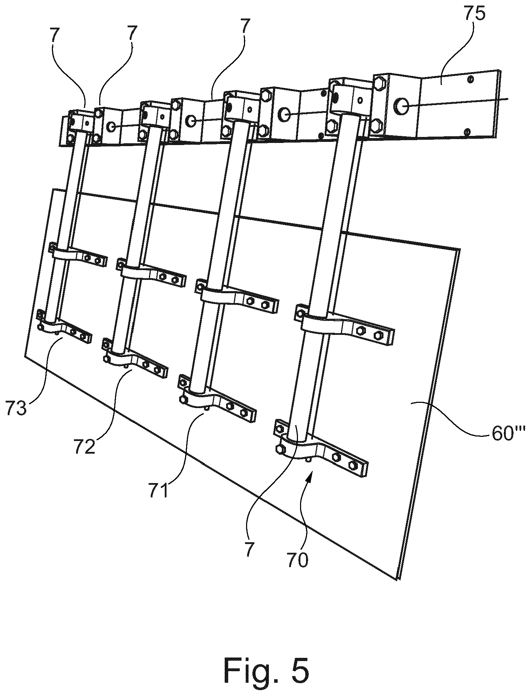

In fig. 5 is illustrated an example of a rectangular valve plate 60"', having four hinge assemblies 7 in order for the valve plate to be sturdy enough due to its size. In connection with the hinge assemblies 7 are provided four nozzles 70,71,72,73 connected to a pressurized conduit system 75, which in turn is connected to a source of pressurized fluid, in particular water. The nozzles will issue jets of pressurized water along the surface of the valve plate 60'" and into any sediment accumulated in front of the valve plate 60"'. The turbulence created by the jets will fluidize any sediment and either loosen it to such a degree that the valve plate 60'" can force its way through the sediment, or the sediment will be flushed away.

Naturally, other combinations of valve plate sizes, distribution etc. may also be contemplated within the scope of the present invention which is only to be limited by the scope of the appended claims.

## Claims

1. A flap gate (1) for at least opening and closing a part of an opening of an outflow pipe (2), said flap gate (1) comprising two or more valve plates (5,6), each valve plate (5,6) having a separate hinge assembly (7,8) pivotably and independently mounted on a frame member (3), said frame member (3) being adapted to be mounted across the opening of the outflow pipe (2), wherein each hinge assembly (7,8) comprises at least one independent hinge mounting block (14) fastened to the frame member (3), wherein the hinge mounting block (14) is pivotably connected by means of a connecting rod (9) to a bracket (11,12) fastened on the valve plate (5,6) wherein the flap gate (1) has a first and a second valve plate (5,6) wherein the frame member (3) has a central beam (30), substantially dividing the opening, wherein the first valve plate (6) in the valve plate's (5,6) closed position is in contact with part of the frame member (3) and the central beam (30), and wherein the second valve plate's (5) hinge assembly is attached to the central beam (30), and in the second valve plate's (5) closed position the second valve plate (5) is in contact with part of the frame member (3) and the central beam (30) **characterised in that** each connecting rod (9) is connected by an axle (13) in the hinge mounting block (14).

2. A flap gate (1) according to claim 1, wherein a bulbous member (40) is arranged on one or more valve plates (5,6), where said bulbous member (40) in use is arranged on the side of the valve plates (5,6) facing away from the opening of the outflow pipe (2) (downstream side).

3. Flap gate (1) according to any preceding claim wherein each valve plate (5,6) along its periphery on the side of the valve plate (5,6) facing the frame member (3) and/or the central beam member is provided with a flexible gasket.

4. Flap gate (1) according to claim 3 wherein the gasket is made of a large number of glass-filaments arranged inside a flexible and permeable sleeve.

5. Flap gate according to any preceding claim wherein on the side of the valve plates (5,6) which in use faces the outflow pipe (2), a flow diverter (50,51) is arranged on a lower part of at least one valve plate, said flow diverter (50,51) providing a curved surface urging the water outflow downwards.

6. Flap gate (1) according to any preceding claim wherein on the central beam (30) a secondary flow diverter (52) is provided, said secondary flow diverter (52) provided with at least one curved surface, in use directing the water flow in a direction across the opening of the outflow pipe (2).

7. Flap gate according to claim 6, wherein the secondary flow diverter (52) is provided with two substantially mirror image curved surfaces, which surfaces in use are symmetric about a horizontal axis across the frame member (3), and which secondary flow diverter (52) extends away from the central beam (30) into the flow direction.

8. Flap gate (1) according to claim 1 **characterised in that** the lower valve plate (5) is provided with a water passageway created between a lower end of the valve plate (5) and the opening of the pipe.

9. Flap gate (1) according to any preceding claim **characterised in that** one or more nozzles (70,71,72,73) are arranged on the flap gates' (1) side opposite to the side facing the outflow opening, where the nozzles (70,71,72,73) are connected to a source of pressurized water, for directing a jet of water against sediment in the vicinity of a lower extremity of the flap gates (1).

10. Flap gate according to claim 1 wherein each connecting rod (9) is connected to the bracket (11,12) fastened on the valve plate (5,6) and the independent hinge mounting block (14), such that the distance along the connecting rod (9) between fastening point of the bracket (11,12) and the independent hinge block (14) may be chosen freely.

## Patentansprüche

1. Klappe (1), um einen Teil einer Öffnung eines Ausflussrohres (2) zumindest zu öffnen und zu schließen, wobei die Klappe (1) zwei oder mehr Ventilplatten (5, 6) umfasst, wobei jede Ventilplatte (5, 6) eine separate Scharnierbaugruppe (7, 8) aufweist, die schwenkbar und unabhängig an einem Rahmenelement (3) montiert ist, wobei das Rahmenelement (3) ausgelegt ist, um quer durch die Öffnung des Ausflussrohres (2) montiert zu sein, wobei jede Scharnierbaugruppe (7, 8) zumindest einen unabhängigen Scharniermontageblock (14) umfasst, der an dem Rahmenelement (3) befestigt ist, wobei der Scharniermontageblock (14) mittels einer Verbindungsstange (9) schwenkbar mit einer Halterung (11, 12) verbunden ist, die an der Ventilplatte (5, 6) befestigt ist, wobei die Klappe (1) eine erste und eine zweite Ventilplatte (5, 6) aufweist, wobei das Rahmenelement (3) einen zentralen Balken (30) aufweist, der die Öffnung im Wesentlichen teilt, wobei die erste Ventilplatte (6) in der geschlossenen Position der Ventilplatte (5, 6) in Kontakt mit einem Teil des Rahmenelements (3) und dem zentralen Balken (30) ist, und wobei die Scharnierbaugruppe der zweiten Ventilplatte (5) an dem zentralen Balken (30) angebracht ist und die zweite Ventilplatte (5) in der geschlossenen Position der zweiten Ventilplatte (5) in Kontakt mit einem Teil des Rahmenelements (3) und dem zentralen Balken (30) ist, **dadurch gekennzeichnet, dass** jede Verbindungsstange (9) durch eine Achse (13) in dem Scharniermontageblock (14) verbunden ist.

2. Klappe (1) nach Anspruch 1, wobei ein bauchiges Element (40) an einer oder mehreren Ventilplatten (5, 6) angeordnet ist, wobei das bauchige Element (40) in Verwendung auf der Seite der Ventilplatten (5, 6) angeordnet ist, die von der Öffnung des Ausflussrohres (2) abgewandt ist (stromabwärtige Seite).

3. Klappe (1) nach einem vorhergehenden Anspruch, wobei jede Ventilplatte (5, 6) entlang ihres Umfangs auf der Seite der Ventilplatte (5, 6), die dem Rahmenelement (3) und/oder dem zentralen Balkenelement zugewandt ist, mit einer flexiblen Dichtung versehen ist.

4. Klappe (1) nach Anspruch 3, wobei die Dichtung aus einer großen Anzahl an Glasfilamenten hergestellt ist, die innerhalb einer flexiblen und durchlässigen Hülse angeordnet ist.

5. Klappe nach einem vorhergehenden Anspruch, wobei auf der Seite der Ventilplatten (5, 6), die in Verwendung dem Ausflussrohr (2) zugewandt ist, ein Flussteiler (50, 51) an einem unteren Teil von zumindest einer Ventilplatte angeordnet ist, wobei der Flussteiler (50, 51) eine gekrümmte Fläche bereitstellt, die den Wasserausfluss nach unten drängt.

6. Klappe (1) nach einem vorhergehenden Anspruch, wobei an dem zentralen Balken (30) ein sekundärer Flussteiler (52) bereitgestellt ist, wobei der sekundäre Flussteiler (52) mit zumindest einer gekrümmten Fläche versehen ist, die in Verwendung den Wasserfluss in einer Richtung quer durch die Öffnung des Ausflussrohres (2) leitet.

7. Klappe nach Anspruch 6, wobei der sekundäre Flussteiler (52) mit zwei im Wesentlichen gekrümmten Spiegelbildflächen versehen ist, wobei die Flächen in Verwendung symmetrisch um eine horizontale Achse quer durch das Rahmenelement (3) sind, und wobei sich der sekundäre Flussteiler (52) weg von dem zentralen Balken (30) in die Flussrichtung erstreckt.

8. Klappe (1) nach Anspruch 1, **dadurch gekennzeichnet, dass** die untere Ventilplatte (5) mit einem Wasserdurchlass versehen ist, der zwischen einem unteren Ende der Ventilplatte (5) und der Öffnung des Rohres erzeugt wird.

9. Klappe (1) nach einem vorhergehenden Anspruch, **dadurch gekennzeichnet, dass** eine oder mehrere Düsen (70, 71, 72, 73) auf der Seite der Klappen (1) gegenüber der Seite, die der Ausflussöffnung zugewandt ist, angeordnet sind, wobei die Düsen (70, 71, 72, 73) mit einer Quelle von unter Druck gesetztem Wasser verbunden sind, um einen Wasserstrahl gegen Sediment in der Nähe eines unteren Endpunktes der Klappen (1) zu leiten.

10. Klappe nach Anspruch 1, wobei jede Verbindungsstange (9) mit der Halterung (11, 12), die an der Ventilplatte (5, 6) befestigt ist, und dem unabhängigen Scharniermontageblock (14) verbunden ist, sodass die Strecke entlang der Verbindungsstange (9) zwischen dem Befestigungspunkt der Halterung (11, 12) und dem unabhängigen Scharnierblock (14) frei gewählt werden kann.

## Revendications

1. Vanne à clapet (1) destinée au moins à ouvrir et fermer une partie d'une ouverture d'un tuyau d'évacuation (2), ladite vanne à clapet (1) comprenant deux plaques de vanne (5, 6) ou plus, chaque plaque de vanne (5, 6) ayant un ensemble d'articulation distinct (7, 8) monté de manière pivotante et indépendante sur un élément formant cadre (3), ledit élément formant cadre (3) étant adapté pour être monté à travers l'ouverture du tuyau d'évacuation (2), dans laquelle chaque ensemble d'articulation (7, 8) comprend au moins un bloc de montage d'articulation indépendant (14) fixé à l'élément formant cadre (3), dans laquelle le bloc de montage d'articulation (14) est relié de manière pivotante au moyen d'une tige de liaison (9) à un support (11, 12) fixé sur la plaque de vanne (5, 6), dans laquelle la vanne à clapet (1) a une première et une seconde plaque de vanne (5, 6), dans laquelle l'élément formant cadre (3) a une poutre centrale (30), divisant sensiblement l'ouverture, dans laquelle la première plaque de vanne (6) dans la position fermée de la plaque de vanne (5, 6) est en contact avec une partie de l'élément formant cadre (3) et la poutre centrale (30), et dans laquelle l'ensemble d'articulation de la seconde plaque de vanne (5) est attaché à la poutre centrale (30), et dans la seconde position de la seconde plaque de vanne (5), la seconde plaque de vanne (5) est en contact avec une partie de l'élément formant cadre (3) et la poutre centrale (30), **caractérisée en ce que** chaque tige de liaison (9) est reliée par un axe (13) dans le bloc de montage d'articulation (14).

2. Vanne à clapet (1) selon la revendication 1, dans laquelle un élément bulbeux (40) est agencé sur une ou plusieurs plaques de vanne (5, 6), où ledit élément bulbeux (40) en utilisation est agencé sur le côté des plaques de vanne (5, 6) orienté à l'opposé de l'ouverture du tuyau d'évacuation (2) (côté aval).

3. Vanne à clapet (1) selon une quelconque revendication précédente, dans laquelle chaque plaque de vanne (5, 6) le long de sa périphérie sur le côté de la plaque de vanne (5, 6) faisant face à l'élément formant cadre (3) et/ou à la poutre centrale est pourvue d'un joint souple.

4. Vanne à clapet (1) selon la revendication 3, dans laquelle le joint est constitué d'un grand nombre de filaments de verre agencés à l'intérieur d'un manchon souple et perméable.

5. Vanne à clapet selon une quelconque revendication précédente, dans laquelle sur le côté des plaques de vanne (5, 6) qui en utilisation font face au tuyau d'évacuation (2), un déviateur d'écoulement (50, 51) est agencé sur une partie inférieure d'au moins une plaque de vanne, ledit déviateur d'écoulement (50, 51) fournissant une surface incurvée forçant l'évacuation d'eau vers le bas.

6. Vanne à clapet (1) selon une quelconque revendication précédente, dans laquelle sur la poutre centrale (30), est prévu un déviateur d'écoulement secondaire (52), ledit déviateur d'écoulement secondaire (52) étant pourvu d'au moins une surface incurvée, dirigeant en utilisation l'écoulement d'eau dans une direction à travers l'ouverture du tuyau d'évacuation (2).

7. Vanne à clapet selon la revendication 6, dans laquelle le déviateur d'écoulement secondaire (52) est pourvu de deux surfaces incurvées sensiblement en image miroir, lesquelles surfaces, en utilisation, sont symétriques autour d'un axe horizontal à travers l'élément formant cadre (3), et lequel déviateur d'écoulement secondaire (52) s'étend à partir de la poutre centrale (30) dans la direction d'écoulement.

8. Vanne à clapet (1) selon la revendication 1, **caractérisée en ce que** la plaque de vanne inférieure (5) est pourvue d'un passage d'eau créé entre une extrémité inférieure de la plaque de vanne (5) et l'ouverture du tuyau.

9. Vanne à clapet (1) selon une quelconque revendication précédente, **caractérisée en ce qu'**une ou plusieurs buses (70, 71, 72, 73) sont agencées sur le côté des vannes à clapet (1) opposé au côté faisant face à l'ouverture d'évacuation, où les buses (70, 71, 72, 73) sont reliées à une source d'eau sous pression, pour diriger un jet d'eau contre le sédiment au voisinage d'une extrémité inférieure des vannes à clapet (1).

10. Vanne à clapet selon la revendication 1, dans laquelle chaque tige de liaison (9) est reliée au support (11, 12) fixé sur la plaque de vanne (5, 6) et le bloc de montage d'articulation indépendant (14), de telle sorte que la distance le long de la tige de liaison (9) entre le point de fixation du support (11, 12) et le bloc d'articulation indépendant (14) peut être choisie librement.
